(19) Europäisches Patentamt
European Patent Office
Office européen des brevets

(11) **EP 4 214 645 B1**

(12) **FASCICULE DE BREVET EUROPEEN**

(45) Date de publication et mention de la délivrance du brevet:
**11.03.2026 Bulletin 2026/11**

(21) Numéro de dépôt: **21773811.1**

(22) Date de dépôt: **14.09.2021**

(51) Classification Internationale des Brevets (IPC):
**G06N 10/40** *(2022.01)*

(52) Classification Coopérative des Brevets (CPC):
**G06N 10/40**

(86) Numéro de dépôt international:
**PCT/EP2021/075163**

(87) Numéro de publication internationale:
**WO 2022/058294 (24.03.2022 Gazette 2022/12)**

(54) **DISPOSITIF ET PROCÉDÉ DE CALCUL QUANTIQUE À MODES DE MAJORANA**

VERFAHREN UND VORRICHTUNG ZUR QUANTENBERECHNUNG MIT MAJORANA-MODI

METHOD AND DEVICE FOR QUANTUM COMPUTING WITH MAJORANA MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2020 FR 2009318**

(43) Date de publication de la demande:
**26.07.2023 Bulletin 2023/30**

(73) Titulaires:
- **Centre national de la recherche scientifique**
  **75016 Paris (FR)**
- **SORBONNE UNIVERSITE**
  **75006 Paris (FR)**
- **Ecole Normale Supérieure de Paris**
  **75320 Paris Cedex 05 (FR)**
- **Université Paris Cité**
  **75006 Paris (FR)**

(72) Inventeurs:
- **KONTOS, Takis**
  **75231 PARIS Cedex 05 (FR)**
- **CONTAMIN, Lauriane**
  **75231 PARIS Cedex 05 (FR)**
- **DESJARDINS, Matthieu**
  **75231 PARIS Cedex 05 (FR)**
- **DELBECQ, Matthieu**
  **75231 PARIS Cedex 05 (FR)**
- **COTTET, Audrey**
  **75231 PARIS Cedex 05 (FR)**

(74) Mandataire: **IPAZ**
**Bâtiment Platon**
**Parc Les Algorithmes**
**91190 Saint-Aubin (FR)**

(56) Documents cités:
**US-B2- 10 346 348**

- **T. HYART ET AL: "Flux-controlled quantum computation with Majorana fermions", PHYSICAL REVIEW B, vol. 88, no. 3, 1 July 2013 (2013-07-01), US, pages 1 - 20, XP055328037, ISSN: 1098-0121, DOI: 10.1103/ PhysRevB.88.035121**
- **GUIDO BURKARD ET AL: "Superconductor-semiconductor hybrid cavity quantum electrodynamics", ARXIV.ORG, CORNELL UNIVERSITY LIBRARY, 201 OLIN LIBRARY CORNELL UNIVERSITY ITHACA, NY 14853, 3 May 2019 (2019-05-03), XP081271901**
- **COTTET AUDREY ET AL: "Squeezing light with Majorana fermions", vol. 88, no. 19, 1 November 2013 (2013-11-01), US, pages 195415 - 1, XP055805530, ISSN: 1098-0121, Retrieved from the Internet <URL:https://journals.aps.org/prb/ pdf/10.1103/PhysRevB.88.195415> DOI: 10.1103/ PhysRevB.88.195415**

- VIKTORIIA KORNICH ET AL: "Braiding and all quantum operations with Majorana modes in 1D", ARXIV.ORG, CORNELL UNIVERSITY LIBRARY, 201 OLIN LIBRARY CORNELL UNIVERSITY ITHACA, NY 14853, 14 September 2020 (2020-09-14), XP081895731, DOI: 10.1103/PHYSREVLETT.126.117701

- MIRCEA TRIF ET AL: "Photon assisted braiding of Majorana fermions in a cavity", ARXIV.ORG, CORNELL UNIVERSITY LIBRARY, 201 OLIN LIBRARY CORNELL UNIVERSITY ITHACA, NY 14853, 1 October 2018 (2018-10-01), XP081357575, DOI: 10.1103/PHYSREVLETT.122.236803

**Description**

L'invention se situe dans le domaine du calcul quantique et plus généralement de l'information quantique.

Les fermions de Majorana sont des hypothétiques particules élémentaires de spin ½ qui sont leur propre antiparticule. Plus récemment ce terme - ou des expressions telles que « états de Majorana », « modes zéro de Majorana » ont été employées pour désigner un type particulier de quasi-particule dans des solides, et notamment dans des supraconducteurs topologiques. Un mode de Majorana correspond à une excitation d'énergie nulle (d'où le terme de « mode zéro ») qui peut se produire en particulier en correspondance d'un vortex dans un supraconducteur topologique.

Par définition, un mode de Majorana est représenté par un opérateur auto-adjoint :

$$\gamma_0^{\dagger} = \gamma_0$$

On comprend qu'un mode de Majorana isolé ne permet pas de définir un opérateur de création ou d'annihilation, car ces deux opérateurs coïncideraient, ce qui est contradictoire. La difficulté peut cependant être surmontée en considérant deux modes de Majorana, identifiés par des indices (1) et (2). On peut alors définir des opérateurs

$$c_{12}^{\dagger} = \frac{\gamma_0^{(1)} + i\gamma_0^{(2)}}{2}, \quad c_{12} = \frac{\gamma_0^{(1)} - i\gamma_0^{(2)}}{2}$$

qui satisfont la relation usuelle d'anti-commutation des fermions :

$$\{c_{12}^{\dagger}, c_{12}\} = 1$$

et peuvent donc être considérés, respectivement, un opérateur de création et d'annihilation. Comme il faut deux modes de Majorana pour définir un opérateur de création ou d'annihilation, on dit généralement qu'un tel mode constitue « un demi-fermion ».

Le fait qu'une paire de modes séparés soit nécessaire pour définir les opérateurs de création et annihilation d'un fermion introduit une corrélation quantique non-locale entre ces modes, qui modifie de manière drastique leur nature quantique. Aussi, l'échange de deux modes de Majorana (dans l'espace réel ou dans un espace de paramètres approprié) produit un état de même énergie que l'état initial qui est relié à l'état initiale non pas par un simple facteur de phase, comme pour les bosons ou fermions, mais par une transformation unitaire :

$$U_{ij} = \exp\left(-\frac{\pi}{4}\gamma_0^{(i)}\gamma_0^{(j)}\right)$$

Si on considère trois modes de Majorana d'indices (1), (2) et (3) et on considère les échanges (1) - (2) et (2) - (3), on peut démontrer que les opérateurs $U_{12}$ et $U_{23}$ ne commutent pas. On dit alors que le processus d'échange est non-abélien.

Les échanges de modes de Majorana sont également appelés opérations de « tressage » (« braiding » en anglais) car les lignes d'univers représentant ces modes dans l'espace-temps forment une sorte de tresse.

Il a été démontré qu'un ensemble de quatre modes de Majorana permet d'encoder un qubit et que les opérations de tressage permettent de réaliser des portes quantiques dites « portes de Clifford » utiles pour effectuer des calculs quantiques. D'autres opérations sur les modes de Majorana permettent également la manipulation de qubits, notamment leur « fusion » (qui équivaut à une mesure projective).

Pour une introduction plus détaillée aux modes de Majorana et à leur application au calcul quantique on pourra se rapporter à (Sato 2007) et à (Beenakker 2019).

Les modes de Majorana constituent une approche particulièrement prometteuse pour la réalisation d'un ordinateur quantique car les opérations de tressage, étant donné qu'elles effectuent des transformations entre des états localement indistinguables, sont protégées des sources locales de décohérence (« protection topologique »). Il existe néanmoins des obstacles considérables à surmonter pour la réalisation d'un processeur quantique à modes de Majorana.

Il est par exemple connu de réaliser des modes de Majorana à partir d'une structure supraconductrice unidimensionnelle (nanofil) présentant un fort couplage spin-orbite, voir par exemple (Cottet 2013). Cependant, l'échange des modes de Majorana ne peut pas être effectué dans une géométrie strictement unidimensionnelle. Des circuits supraconducteurs plus complexes, présentant une géométrie bidimensionnelle ou en réseau, ont été proposés - voir par exemple (You 2014) et (Vijay 2016), mais la réalisation de tels circuit se heurte à des difficultés technologiques insurmontables à ce jour.

(Kornich 2020) propose de réaliser un tressage à partir d'un agencement unidimensionnel de modes de Majorana en exploitant des transitions entre lesdits modes de Majorana et le premier niveau excité au-dessus d'eux. Un inconvénient de cette approche est qu'elle compromet la protection topologique, le système étant sujet à relaxation lorsqu'il se trouve dans l'état excité.

L'invention vise à surmonter ces inconvénients et à proposer un dispositif de calcul quantique à modes de Majorana dont la réalisation ne pose pas de difficultés technologiques majeures.

Conformément à l'invention, ce but est atteint en couplant un dispositif électronique supraconducteur, de préférence unidimensionnel, supportant des modes de Majorana à une cavité hyperfréquence et en utilisant un degré de liberté photonique de la cavité pour effectuer le tressage. Le couplage d'un dispositif électronique supraconducteur unidimensionnel supportant des modes de Majorana à une cavité hyperfréquence a déjà été décrit dans (Cottet 2013), mais pas l'utilisation de ce couplage pour réaliser un tressage. La présente invention est définie par les revendications indépendantes 1, 7 et 9. Certains modes de mise en œuvre sont également dans les revendications dépendantes.

Un objet de l'invention est donc un dispositif de calcul quantique comprenant :

- une cavité hyperfréquence ayant un port d'entrée et un port de sortie, distincts ou coïncidents ;
- un dispositif électronique supraconducteur couplé de manière capacitive à la cavité hyperfréquence et configuré pour supporter une chaine de 2N modes de Majorana, N étant un entier positif ; et
- des moyens de couplage pour appliquer des excitations hyperfréquences entre chaque paire de modes de Majorana adjacents de la chaîne.

Selon des modes de réalisation particuliers :

- Le dispositif peut comprendre également un circuit électronique de mesure adapté pour mesurer au moins une quadrature d'un champ hyperfréquence issu du port de sortie de la cavité.

- Le dispositif peut comprendre également au moins un générateur de signaux hyperfréquence configuré pour générer :

  - des impulsions hyperfréquence à une première fréquence résonante avec la cavité ; et
  - des impulsions hyperfréquence à une deuxième fréquence non résonante avec la cavité

  et pour appliquer sélectivement ces impulsions auxdits moyens de couplage et au port d'entrée de la cavité.

- N peut notamment être un multiple de 3, moyennant quoi le dispositif électronique supraconducteur supporte au moins un groupe constitué de quatre modes de Majorana susceptibles d'encoder un qubit plus deux modes de Majorana auxiliaires. Dans ce cas, le dispositif peut comprendre également un circuit électronique de contrôle configuré ou programmé pour piloter le générateur de signaux hyperfréquence de manière à :

    a) appliquer une première excitation hyperfréquence à la première fréquence entre un quatrième et un cinquième mode de Majorana à partir d'une extrémité de la chaine ou d'une portion de la chaine comprenant six modes de Majorana ; puis
    b) appliquer une deuxième excitation hyperfréquence à la première fréquence entre un premier et un deuxième mode de Majorana à partir de ladite extrémité ; puis
    c) appliquer simultanément une troisième excitation hyperfréquence à la deuxième fréquence entre le deuxième et un troisième mode de Majorana à partir de ladite extrémité ; une quatrième excitation hyperfréquence à la deuxième fréquence entre le troisième et le quatrième mode de Majorana, la troisième et la quatrième excitations hyperfréquences présentant un déphasage ; et une cinquième excitation hyperfréquence à la première fréquence au port d'entrée de la cavité ; puis
    d) appliquer une sixième excitation hyperfréquence à la première fréquence entre le deuxième et le troisième mode de Majorana ; puis
    e) appliquer simultanément une septième excitation hyperfréquence à la deuxième fréquence entre le quatrième et le cinquième mode de Majorana ; une huitième excitation hyperfréquence à la deuxième fréquence entre le cinquième et un sixième mode de Majorana partir de ladite extrémité ; et une neuvième excitation hyperfréquence à la première fréquence au port d'entrée de la cavité ; l'ordre des opérations c) et d) pouvant être inversé.

- Le circuit électronique de contrôle peut être configuré ou programmé pour piloter le circuit électronique de mesure pour mesurer une composante du champ hyperfréquence issu du port de sortie de la cavité en phase avec les excitations à la première fréquence après l'application de chaque excitation ou groupe d'excitations.

- Le circuit électronique de contrôle peut être également configuré ou programmé pour piloter le générateur de signaux hyperfréquence de manière à : appliquer simultanément une neuvième et une dixième excitation hyperfréquence à la deuxième fréquence entre deux paires adjacentes de modes de Majorana adjacent, et pour piloter le circuit électronique de mesure pour mesurer deux composantes du champ hyperfréquence issu du port de sortie de la cavité en phase et en quadrature avec les excitations à la première fréquence.

- Le dispositif électronique supraconducteur peut comprendre un nanofil semi-conducteur présentant un couplage spin-orbite, disposé en correspondance d'un ventre du champ électrique d'un mode de la cavité et sur lequel est déposé un matériau supraconducteur, le dispositif comprenant également un aimant générant un champ magnétique parallèle au nanofil.

Le dispositif électronique supraconducteur peut comprendre également 2N-1 électrodes permettant l'application de potentiels électrostatiques pour générer les modes de Majorana, lesdites électrodes constituant également lesdits moyens de couplage pour appliquer des excitations hyperfréqucences.

Un autre objet de l'invention est un procédé de réalisation d'une porte quantique de tressage sur un qubit au moyen d'un tel dispositif de calcul quantique, le procédé comportant les étapes suivantes :

a) application d'une première excitation hyperfréquence à la première fréquence entre un quatrième et un cinquième mode de Majorana à partir d'une extrémité de la chaine ou d'une portion de la chaine comprenant six modes de Majorana ; puis

b) application d'une une deuxième excitation hyperfréquence à la première fréquence entre un premier et un deuxième mode de Majorana à partir de ladite extrémité ; puis

c) application simultanée d'une une troisième excitation hyperfréquence à la deuxième fréquence entre le deuxième et un troisième mode de Majorana à partir de ladite extrémité ; d'une quatrième excitation hyperfréquence à la deuxième fréquence entre le troisième et le quatrième mode de Majorana ; et d'une cinquième excitation hyperfréquence à la première fréquence au port d'entrée de la cavité ; puis

d) application d'une sixième excitation hyperfréquence à la première fréquence entre le deuxième et le troisième mode de Majorana ; puis

e) application simultanée d'une septième excitation hyperfréquence à la deuxième fréquence entre le quatrième et le cinquième mode de Majorana ; d'une huitième excitation hyperfréquence à la deuxième fréquence entre le cinquième et un sixième mode de Majorana partir de ladite extrémité ; et d'une neuvième excitation hyperfréquence à la première fréquence au port d'entrée de la cavité ;

l'ordre des étapes c) et d) pouvant être inversé.

Le procédé peut comprendre également la mesure d'une composante du champ hyperfréquence issu du port de sortie de la cavité en phase avec les excitations à la première fréquence après l'application de chaque excitation ou groupe d'excitations.

Encore un autre objet de l'invention est un procédé de réalisation d'une porte T quantique sur un qubit au moyen d'un tel dispositif de calcul quantique, le procédé comportant les étapes suivantes :

appliquer simultanément deux excitations hyperfréquences à la deuxième fréquence entre deux paires adjacentes de modes de Majorana adjacent, et

mesurer deux composantes du champ hyperfréquence issu du port de sortie de la cavité en phase et en quadrature avec les excitations à la première fréquence.

D'autres caractéristiques, détails et avantages de l'invention ressortiront à la lecture de la description faite en référence aux dessins annexés donnés à titre d'exemple et qui représentent, respectivement :

[Fig.1], un système de quatre modes de Majorana dans une cavité hyperfréquence ;

[Fig. 2A], le signal de sortie de la cavité en fonction du temps lors d'une opération de fusion de deux modes de Majorana du système de la [Fig. 1] ;

[Fig. 2B], une représentation dans le plan I/Q du champ photonique dans la cavité lors de ladite opération de fusion ;

[Fig. 2C], l'évolution de la matrice densité du dispositif supraconducteur en fonction du temps au cours de ladite opération de fusion ;

[Fig. 2D] et [Fig. 2E], deux séquences d'impulsions hyperfréquence pour réaliser ladite opération de fusion et une mesure de parité ;

[Fig. 2F] et [Fig. 2G], les états du champ photonique de la cavité au cours des séquences des figures [Fig. 2D] et [Fig. 2E], respectivement ;

[Fig. 3A], une séquence d'impulsions hyperfréquence pour réaliser une opération de tressage des modes de Majorana du système de la [Fig. 1] ;

[Fig. 3B], l'évolution du champ photonique de la cavité au cours de la troisième impulsion de la séquence de la figure [Fig. 3A] ;

[Fig. 3C], l'évolution du système au cours de ladite opération de tressage sur une sphère de Bloch ;

[Fig. 4], le schéma de principe d'un dispositif selon un mode de réalisation de l'invention, utilisant six modes de Majorana ;

[Fig. 5A] et [Fig. 5B], deux séquences d'impulsions alternatives pour réaliser des opérations de tressage respective des modes de Majorana du système de la [Fig. 4] ;

[Fig. 6] un exemple de réalisation physique du dispositif de la [Fig. 4] ; et

[Fig. 7] une séquence d'impulsions pour réaliser une opération de type « porte T » sur les modes de Majorana du système de la [Fig. 4].

Dans la suite, le terme « hyperfréquences » désignera la plage de fréquence comprise entre 300 MHz et 300 GHz, et plus particulièrement entre 1 GHz et 100 GHz.

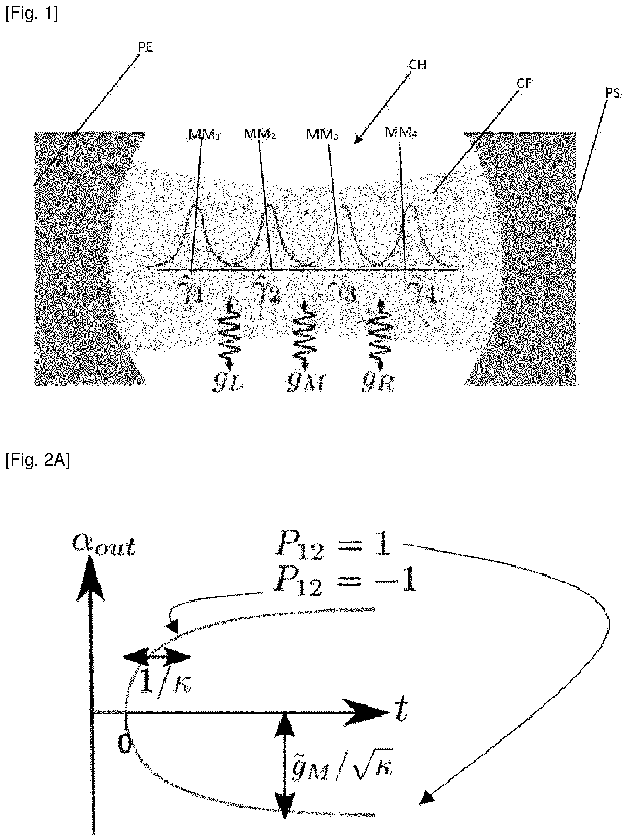

La [Fig. 1] représente une chaîne linéaire de quatre modes de Majorana $MM_1$, $MM_2$ $MM_3$, $MM_4$, qui peuvent être réalisés physiquement dans un dispositif supraconducteur, couplés de manière capacitive à une cavité hyperfréquence CH qui peut être représentée par un mode photonique individuel $\hat{a}$ de fréquence $\omega_c$. Chaque mode de Majorana est associé à un opérateur auto-adjoint respectif $\hat{\gamma}_1$, $\hat{\gamma}_2$, $\hat{\gamma}_3$, $\hat{\gamma}_4$. Une superposition entre modes de Majorana adjacents engendre des décalages d'énergie $\epsilon_L$, $\epsilon_M$, $\epsilon_R$ qui décroissent de manière exponentielle avec l'augmentation de la distance entre modes de Majorana. Ces décalages d'énergie brisent, en principe, la protection topologique mais, comme cela sera discuté plus loin, il est possible de les rendre suffisamment faibles pour préserver le passage à l'échelle exponentiel de la protection topologique sur une large plage de paramètres de contrôle, ce qui permet de mettre en œuvre l'invention à partir de différentes plateformes technologiques existantes.

L'hamiltonien de faible énergie H du système peut s'écrire comme la somme de trois termes : un terme $H_{cav}$ représente l'énergie du champ photonique de la cavité, un terme $H_{el}$ représente l'énergie des modes de Majorana et un terme $H_{int}$ représente le couplage entre ces derniers et la cavité :

$$H = H_{el} + H_{int} + H_{cav}$$

$$H_{cav} = \hbar\omega_c \hat{a}^\dagger \hat{a}$$

$$H_{el} = \hbar\left(i\epsilon_L \hat{\gamma}_1 \hat{\gamma}_2 + i\epsilon_M \hat{\gamma}_2 \hat{\gamma}_3 + i\epsilon_R \hat{\gamma}_3 \hat{\gamma}_4\right)$$

$$H_{int} = \hbar\left(ig_L \hat{\gamma}_1 \hat{\gamma}_2 + ig_M \hat{\gamma}_2 \hat{\gamma}_3 + ig_R \hat{\gamma}_3 \hat{\gamma}_4\right)(\hat{a} + \hat{a}^\dagger)$$

où $\hat{a}$, $\hat{a}^\dagger$ sont respectivement l'opérateur d'annihilation et de création du champ photonique dans la cavité et $g_L$, $g_M$ et $g_R$ les coefficients de couplage entre paires de modes de Majorana adjacents et ce champ photonique.

A partir des opérateurs de Majorana $\hat{\gamma}_1$, $\hat{\gamma}_2$, $\hat{\gamma}_3$, $\hat{\gamma}_4$ il est possible de définir des charges topologiques. Pour une chaîne de quatre modes de Majorana il y a trois façons d'apparier ces modes de manière à former deux charges topologiques correspondant à des opérateurs de création fermioniques :

$$\hat{c}_L = \frac{1}{2}(\hat{\gamma}_1 + i\hat{\gamma}_2) \quad \text{et} \quad \hat{c}_R = \frac{1}{2}(\hat{\gamma}_3 + i\hat{\gamma}_4)$$

$$\hat{c}_m = \frac{1}{2}(\hat{\gamma}_2 + i\hat{\gamma}_3) \quad \text{et} \quad \hat{c}_{ex} = \frac{1}{2}(\hat{\gamma}_1 + i\hat{\gamma}_4)$$

$$\hat{c}_o = \frac{1}{2}(\hat{\gamma}_1 + i\hat{\gamma}_3) \quad \text{et} \quad \hat{c}_e = \frac{1}{2}(\hat{\gamma}_4 + i\hat{\gamma}_2)$$

Le système électronique peut être donc exprimé dans les bases

$$\{|0_i, 0_j\rangle, |1_i, 0_j\rangle, |0_i, 1_j\rangle, |1_i, 1_j\rangle\} \quad \text{où} \quad (i, j) \in \{(L, R), (m, ex), (o, e)\}.$$

L'opérateur de parité associé à une de ces charges topologiques est donné par

$$\hat{P}_{ij} = i\gamma_i \gamma_j.$$

On considère ensuite que le couplage électron - photon peut être modulé à une fréquence $\omega_{RF}$ dans le domaine des hyperfréquences :

$$g_O(t) = \bar{g}_O + \tilde{g}_O \cos(\omega_{RF} t + \phi_O)$$

avec O=L, M, R et $\phi_O$ étant une phase, par exemple au moyen de grilles (électrodes isolées) couplées capacitivement à des régions respectives du dispositif supraconducteur (gauche, milieu, droite). De cette façon, l'excitation hyperfréquence module le couplage $g_O$ par l'intermédiaire d'une modulation de la superposition entre les modes de Majorana, et donc des décalages d'énergie : $\varepsilon_i(t) = \bar{\varepsilon}_i + \tilde{\varepsilon}_i \cos(\omega_{RF} t + \phi_i)$ où $\bar{\varepsilon}_i$ est un terme constant dont la valeur peut être variée en appliquant une tension continue à la grille (i=L, M, R).

Un champ électromagnétique CF se développe dans la cavité lorsqu'un coefficient de couplage, par exemple $g_L$, est modulé à la fréquence de résonance de la cavité : $\omega_{RF} = \omega_c$. Ce champ est directement lié à la parité de la section gauche de la chaîne de modes de Majorana. Les composantes $H_{el}$ et $H_{int}$ de l'hamiltonien de faible énergie peuvent d'ailleurs s'écrire :

$$H_{el} = i\hbar \epsilon_L(t) \hat{\gamma}_1 \hat{\gamma}_2$$

$$H_{int} = i\hbar g_L(t) \hat{\gamma}_1 \hat{\gamma}_2 (\hat{a} + \hat{a}^\dagger)$$

L'hamiltonien de faible énergie peut être réecrit dans un référentiel tournant à la fréquence $\omega_c$ en négligeant un terme statique, proportionnel à $\bar{g}_L$ conformément à l'approximation d'onde tournante :

$$\tilde{H} = H_{el} + \frac{\hbar}{2}\tilde{g}_L(e^{i\phi_L}\hat{a}^\dagger + e^{-i\phi_L}\hat{a})i\hat{\gamma}_1\hat{\gamma}_2$$

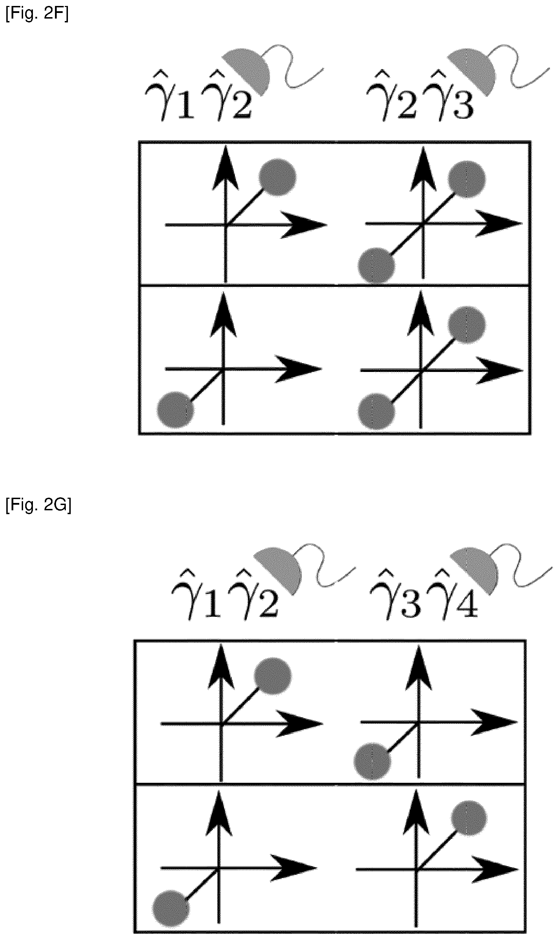

Cela induit un couplage effectif entre les modes de Majorana $MM_1$ et $MM_2$ qui peut être utilisé pour mesurer leur parité $\hat{P}_{12} = i\hat{\gamma}_1\hat{\gamma}_2$ à travers le champ CF, comme illustré par les figures [Fig. 2A] à [Fig. 2G]. Il est donc possible de fusionner les modes de Majorana $MM_1$ et $MM_2$ et de détecter cette fusion grâce aux photons de la cavité, extrait par l'intermédiaire d'un port de sortie PS (un port d'entrée PE, coïncident avec ou distinct de PS, est également prévu pour exciter directement un mode de la cavité)

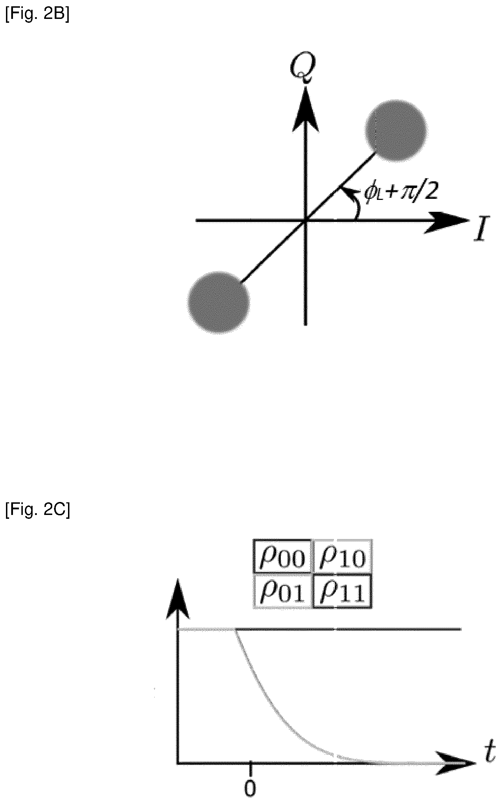

La [Fig. 2A] montre l'évolution au cours du temps t du signal de sortie $\alpha_{out}$ de la cavité, représentatif du champ électromagnétique excité dans elle, en supposant que la modulation du couplage $g_L$ débute à t=0. On observe un transitoire dont la durée est de l'ordre de grandeur de $1/\kappa$, $\kappa$ étant la largeur de ligne de la cavité. L'amplitude du signal après le transitoire vaut $\widetilde{g_L}/\sqrt{\kappa}$. La [Fig. 2B] montre une représentation du champ de sortie dans le plan I/Q ; on remarque que la position de la tache circulaire représentant le mode cohérent du champ dépend de la parité, ce qui permet la mesure de cette dernière, et de la phase $\phi_L$. Le contraste, $\widetilde{g_L}/\sqrt{\kappa}$, peut être beaucoup plus grand que la largeur des taches même dans un régime fortement topologique ( $\widetilde{g_L} \rightarrow 0$ ) pourvu que la largeur de cavité soit suffisamment petite.

La mesure de la parité à travers les photons de la cavité, qui permet la fusion de deux modes de Majorana, nécessite la prise en compte des deux autres modes de Majorana, jusque-là considérés comme étant découplés. En prenant en compte des autres modes de Majorana ($MM_3$, $MM_4$), le couplage entre ces modes et la cavité ne peut plus être considéré purement longitudinal : il y a également une composante transversale du couplage qui induit une évolution temporelle de l'opérateur de parité. Cette évolution peut cependant être négligée pourvu que $\varepsilon_O$, $g_O \ll \omega_c$ pour O=L, M, R, par exemple, $\varepsilon_O$, $g_O \leq 0,1\ \omega_c$.

Les conséquences de l'opération de fusion de modes de Majorana $MM_1$ et $MM_2$ sur les modes additionnels $MM_3$, $MM_4$ ne sont pas banales. En effet, dans la base des deux charges des opérateurs nombre

$$\hat{n}_m = \frac{1}{2}(i\hat{\gamma}_2\hat{\gamma}_3 + 1), \ \hat{n}_{ex} = \frac{1}{2}(i\hat{\gamma}_1\hat{\gamma}_4 + 1)$$, l'opération de fusion projette les deux charges dans un état intriqué :

$$|\Psi_+\rangle = |1_L 0_R\rangle = \frac{1}{\sqrt{2}}(|0_m 1_{ex}\rangle + |1_m 0_{ex}\rangle) \text{ pour } P_{12}=1 \text{ et } |\Psi_-\rangle = |0_L 1_R\rangle =$$

$$\frac{1}{\sqrt{2}}(|0_m 1_{ex}\rangle - |1_m 0_{ex}\rangle) \text{ pour } P_{12}=-1.$$

L'intrication peut être observée en mesurant la charge centrale, ce qui est fait de la même manière que lors d'une fusion par mesure, car il s'agit de mesurer la parité associée à deux modes de Majorana adjacents, $MM_2$ et $MM_3$. En même temps, la projection exprimée dans la base des charges $\hat{n}_L$, $\hat{n}_R$ donne un vecteur d'état ; la mesure de la parité des modes $MM_3$ et $MM_4$ est donc déterministe.

[Fig. 2C] représente l'évolution temporelle des quatre composantes $\rho_{00}$, $\rho_{10}$, $\rho_{01}$, $\rho_{11}$ de la matrice densité de la chaîne de modes de Majorana exprimée dans la base L, R. On constate que l'on part d'un état intriqué et que les cohérences (éléments hors diagonale de la matrice) s'annulent au cours de la mesure projective.

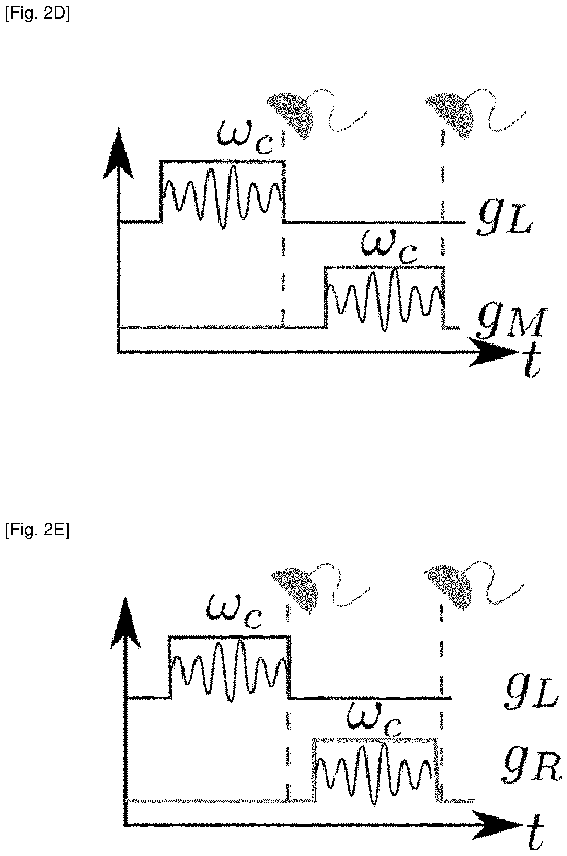

[Fig. 2D] et [Fig. 2F] illustrent la respectivement la séquence d'excitations hyperfréquence et la séquence de mesures utilisées pour effectuer et mesurer la fusion de $MM_1$ et $MM_2$. Premièrement, $g_L$ est modulé à la fréquence $\omega_c$ pendant un temps supérieur à $1/\kappa$ (et typiquement inférieur à $10/\kappa$, par exemple de l'ordre de $3/\kappa$, car la durée maximale admissible de la mesure est limitée par la durée de vie de la parité) pour effectuer la fusion, et une mesure projective est effectuée sur le champ de la cavité. Ensuite la parité $\hat{P}_{23} = \tilde{\gamma}_2\tilde{\gamma}_3$ est mesurée en modulant $g_M$ à la fréquence $\omega_c$ et en effectuant une deuxième mesure du champ de la cavité. Cette deuxième mesure, probabiliste, dépend de l'état dans lequel la chaîne de modes de Majorana a été projetée, $|\Psi_+\rangle$ ou $|\Psi_-\rangle$.

De manière alternative il est possible de mesurer la parité $\hat{P}_{34}$ au moyen des séquences de [Fig. 2E] et [Fig. 2G]. On remarque que, dans ce cas, la deuxième mesure du champ est déterministe.

Si on considère $\kappa = 1$ MHz, ce qui est facilement obtenu par exemple avec des cavités à guide d'onde coplanaire, la durée de mesure est de l'ordre de quelques $\mu$s, ce qui nécessite une durée de vie de la parité de quelques dizaines de $\mu$s. Des couplages charge - cavité de l'ordre de g= 100 MHz peuvent être obtenus, ce qui est compatible avec la condition précitée $\varepsilon_O$, $g_O \ll \omega_c$. En supposant que la force du couplage peut être modulée de 10% il est donc possible d'effectuer une lecture « en un seul coup » de la cavité sans nécessiter des manipulations électriques.

L'opération de fusion nécessite uniquement de mesurer l'opérateur de parité entre des liaisons adjacentes de la chaîne linéaires de modes de Majorana (une « liaison » étant formée par une paire de modes de Majorana adjacents) ou, de manière équivalente, d'activer un couplage entre des paires adjacentes de tels modes. Le tressage est en principe plus contraignant car il nécessite la lecture de la parité correspondant à des modes de Majorana éloignés, par exemple $MM_2$ et $MM_4$. D'après un préjugé répandu, cela nécessiterait une géométrie bidimensionnelle ou au moins en réseau, car il semble difficile de « sauter par-dessus » un mode de Majorana ($MM_3$, dans ce cas) dans une géométrie strictement unidimensionnelle. Une idée à la base de la présente invention est que cela est en fait rendu possible par le couplage avec la cavité hyperfréquence, en utilisant deux excitations impulsionnelles pour moduler les coefficients de couplage $g_M$ et $g_R$. Cela convertit effectivement le système unidimensionnel en un système bidimensionnel par mappage ligne - étoile. Cela permet de créer des réseaux dynamiquement bidimensionnels reconfigurables grâce à l'utilisation des photons de la cavité.

En partant de l'hamiltonien $H_{el} = \hbar(i\varepsilon_L\hat{\gamma}_1\hat{\gamma}_2 + i\varepsilon_M\hat{\gamma}_2\hat{\gamma}_3 + i\varepsilon_R\hat{\gamma}_3\hat{\gamma}_4)$, on considère des excitations hyperfréquences désaccordées avec la cavité ($\omega_{RF} \neq \omega_c$) entre les modes de Majorana $MM_2$ et $MM_3$ et es modes de Majorana $MM_3$ et $MM_4$. Ces excitations induisent la transformation unitaire suivante :

$$U = e^{i\omega_{RF}\hat{a}^\dagger\hat{a}t}e^{\left[\frac{\tilde{g}_M}{\omega_{RF}-\omega_c}(e^{i\phi_M}\hat{a}^\dagger+e^{-i\phi_M}\hat{a})i\hat{\gamma}_2\hat{\gamma}_3+\frac{\tilde{g}_R}{\omega_{RF}-\omega_c}(e^{i\phi_R}\hat{a}^\dagger+e^{-i\phi_R}\hat{a})i\hat{\gamma}_3\hat{\gamma}_4\right]}$$

Ce qui donne l'hamiltonien suivant :

$$H = \hbar(\omega_c - \omega_{RF})\hat{a}^\dagger\hat{a} + 8i\frac{\tilde{g}_M\tilde{g}_R}{\omega_{RF} - \omega_c}\sin(\phi_M - \phi_R)\hat{\gamma}_2\hat{\gamma}_4(\hat{a}^\dagger\hat{a} + 1/2)$$

D'une manière plus générale, en considérant une chaîne comprenant un nombre arbitraire de modes de Majorana, l'utilisation d'une cavité résonante couplée longitudinalement auxdits modes et d'excitations non résonantes permet d'obtenir un hamiltonien effectif ayant la forme :

$$H_{eff} = \sum_{n,m} i\hat{\gamma}_n\hat{\gamma}_m f_{nm}(\hat{a}^\dagger, \hat{a}, \hat{a}^\dagger\hat{a}) + \hbar\delta\hat{a}^\dagger\hat{a}$$

Où $f_{nm}$ est une fonction linéaire et $\delta=\omega_c-\omega_{RF}$ le désaccord entre l'excitation et la cavité. Cela montre que le système constitué par une chaîne de modes de Majorana (quelle que soit sa réalisation physique) couplée longitudinalement à une cavité hyperfréquence, avec des moyens (par exemple des grilles) permettant l'application d'excitations hyperfréquences entre modes de Majorana adjacents, est équivalent à un réseau 2D, ce qui permet des manipulations telles que des portes T et, surtout, des tressages.

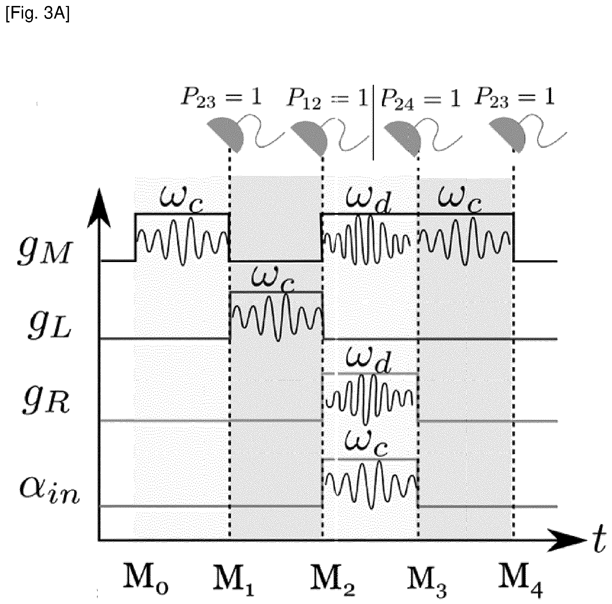

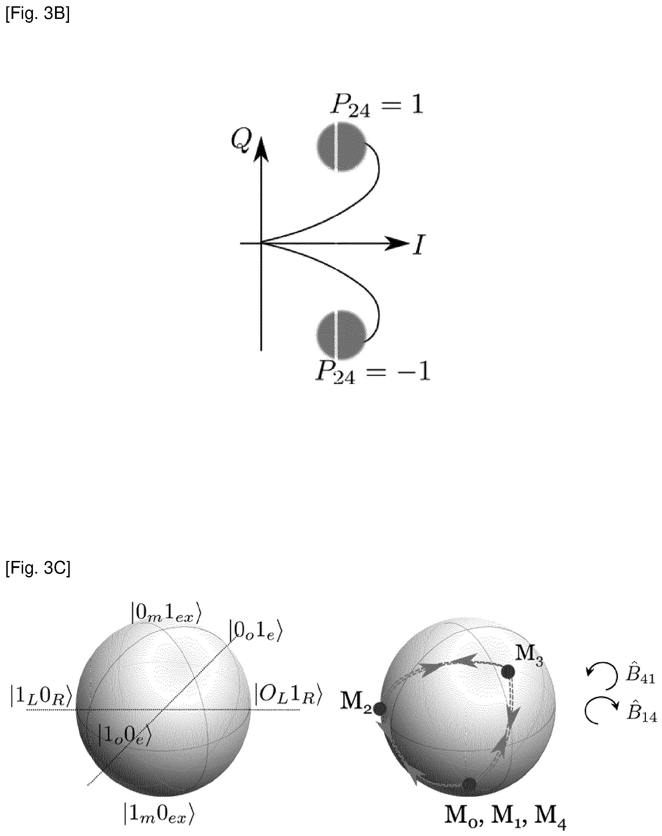

Le protocole permettant de réaliser le tressage $B_{14}$ des modes de Majorana $MM_1$ et MM4 est illustré sur la [Fig. 3A]. Premièrement, à partir d'un état $M_0$ du système, une modulation à la fréquence $\omega_c$ du couplage $g_M$ suivi d'une lecture du champ de la cavité permet une lecture de la parité $P_{23}$, suite à laquelle le système se trouve dans un état $M_1$. Par exemple, on considère le cas où $M_0 = |1_m 0_{ex}\rangle$, auquel cas $P_{23} = 1$ et $M_1 = M_0$. Deuxièmement, une modulation à la fréquence $\omega_c$ du couplage $g_L$ suivi d'une lecture du champ de la cavité permet une lecture de la parité $P_{12}$, suite à laquelle le système se trouve dans un état $M_2$. Dans l'exemple considéré ici, $P_{12} = 1$ et $M_2 = |1_L 0_R\rangle$. Troisièmement, une mesure de la parité $P_{24}$ est effectuée. Cette mesure concerne deux modes de Majorana non adjacents, et elle est plus complexe : elle nécessite la modulation à la fréquence ($\omega_d \neq \omega_c$) du couplage $g_M$ et simultanément, mais avec un déphasage (idéalement de $\pi/2$, en tout cas différent de 0 ou d'un multiple entier de $\pi$) du couplage $g_R$, ainsi que l'application d'une excitation résonante $\alpha_{in}$ (à la fréquence $\omega_c$) au port d'entrée de la cavité. Suite à cette mesure, le système se trouve dans un état $M_3$. Dans l'exemple choisi, $M_3 = |0_o 1_e\rangle$ et $P_{24} = 1$. La [Fig. 3B] montre l'évolution du champ dans la cavité dans les deux cas $P_{24} = 1$ et $P_{24} = -1$. Enfin, une deuxième mesure de la parité $P_{23}$ ($P_{23} =1$ dans l'exemple) amène le système dans l'état $M_4 = M_o e^{i\pi/4}$ - en d'autres termes, le système accumule une phase de $-\pi/4$. La [Fig. 3C] montre l'évolution du système sur une sphère de Bloch pour le tressage $\hat{B}_{14}$ et pour le tressage $\hat{B}_{41}$ qui parcourt la même trajectoire dans le sens inverse et qui conduit à une accumulation de phase de $\pi/4$. De manière synthétique :

$\hat{B}_{14}$ :

$$|1_m 0_{ex}\rangle \xrightarrow{\hat{\Pi}_{23}} |1_m 0_{ex}\rangle \xrightarrow{\hat{\Pi}_{12}} i \,|1_L 0_R\rangle$$

$$\xrightarrow{\hat{\Pi}_{24}} -e^{i\pi/4}\,|0_o 1_e\rangle \xrightarrow{\hat{\Pi}_{23}} e^{-i\pi/4}\,|1_m 0_{ex}\rangle$$

$B41$ :

$$|1_m 0_{ex}\rangle \xrightarrow{\hat{\Pi}_{23}} |1_m 0_{ex}\rangle \xrightarrow{\hat{\Pi}_{24}} -i\,|0_o 1_e\rangle$$

$$\xrightarrow{\hat{\Pi}_{12}} ie^{i\pi/4}\,|1_L 0_R\rangle \xrightarrow{\hat{\Pi}_{23}} e^{i\pi/4}\,|1_m 0_{ex}\rangle$$

Où $\hat{\Pi}_{ij}$ est l'opérateur qui projette l'état du système sur le sous-espace de parité

$$\hat{P}_{ij} = 1.$$

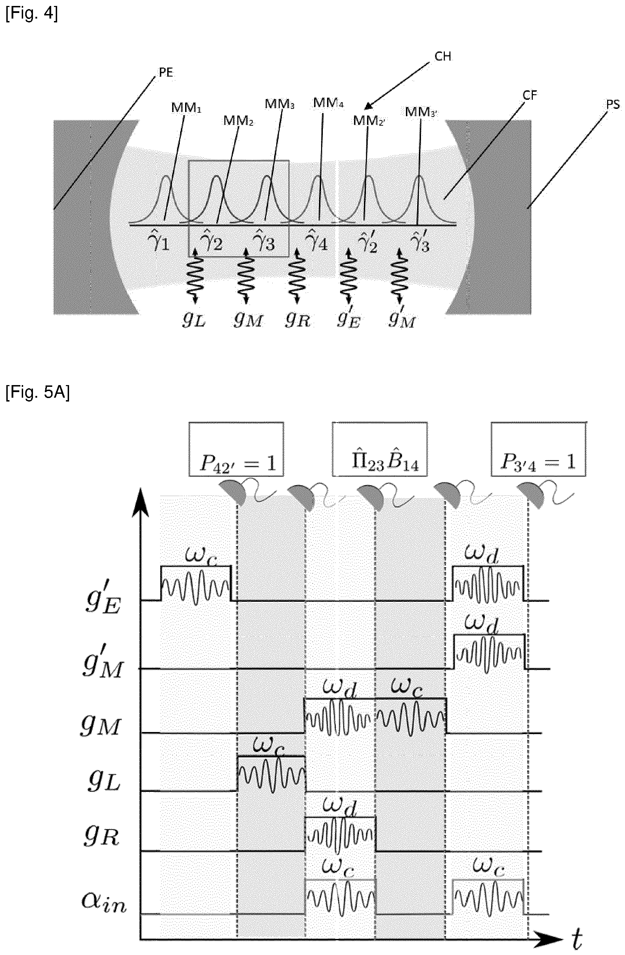

Cependant, le protocole de la [Fig. 3A] ne permet pas réellement d'encoder et manipuler un qubit, car les deux charges $\hat{n}_m$ et $\hat{n}_{ex}$ ne sont pas indépendantes. Pour surmonter cette difficulté, on peut avoir recours à une chaîne de 6 modes de Majorana, comme illustré sur la [Fig. 4]. Ce système est obtenu en étendant la chaîne de modes de Majorana de la [Fig. 2] du côté de $MM_4$ par l'ajout de deux modes de Majorana additionnels $MM_{2'}$, et $MM_{3'}$, associés aux opérateurs auto-adjoints $\hat{\gamma}_2', \hat{\gamma}_3'$. On désigne par $g'_E$ le coefficient de couplage entre $MM_4$ et $MM_{2'}$ et par $g'_M$ celui entre $MM_{2'}$ et $MM_{3'}$.

Un qubit est encodé en utilisant les quatre modes de Majorana $MM_1$, $MM_2$, $MM_3$, et $MM_4$ tandis que les modes de Majorana $MM_2$ et $MM_3$ sont qualifiés d' « auxiliaires » : ils sont utilisés pour préparer, tresser et lire l'état du qubit mais ne peuvent pas servir à l'encoder car ils subissent une projection au cours de l'opération de tressage.

On définit les opérateurs fermioniques suivants :

$$c_{o'} = \frac{1}{2}(\gamma_1 + i\gamma_{3'}),$$

$$c_{m'} = \frac{1}{2}(\gamma_{2'} + i\gamma_{3'})$$

$$c_{e'} = \frac{1}{2}(\gamma_4 + i\gamma_{2'}),$$

$$c_{L'} = \frac{1}{2}(\gamma_1 + i\gamma_{2'}),$$

$$c_{R'} = \frac{1}{2}(\gamma_{3'} + i\gamma_4)$$

et une base $|n_i, n_j, n_k\rangle$ avec $i, j, k \in [e', o', m, , m', ex, m, L', R', m]$

Premièrement, le système est initialisé dans un état

$$|\Psi_{init}\rangle = |0_{e'} 1_{0'} 1_m\rangle = \frac{1}{\sqrt{2}}(|0_{m'} 1_{ex} 1_m\rangle + |1_{m'} 0_{ex} 1_m\rangle).$$

De cette façon, l'on crée une superposition de deux parités différentes dans le sous-espace associé aux modes de Majorana $MM_1$ - $MM_4$. Comme $|0_m 1_{ex} 1_m\rangle$ et $|1_m 0_{ex} 1_m\rangle$ appartiennent à des sous-espaces différents, ils évoluent indépendamment au cours de l'opération de tressage et, même si le système subit un projection à chaque étape, l'on aboutit à une superposition des évolutions de ces deux états, qui acquièrent des phases différentes.

La [Fig. 5A] illustre le protocole de réalisation du tressage $\hat{B}_{14}$.

L'initialisation est effectuée en modulant le coefficient de couplage g'$_E$ à la fréquence $\omega_c$ pour mesurer la parité P$_{42'}$. Le tressage proprement dit - représenté par un opérateur $\hat{\Pi}_{12}\hat{B}_{14}$ comporte la modulation du coefficient de couplage g$_L$ à la fréquence $\omega_c$ ; puis la modulation à la fréquence $\omega_d \neq \omega_c$ du couplage g$_M$ et simultanément, mais avec un déphasage, idéalement de $\pi$/2, du couplage g$_R$, ainsi que l'application d'une excitation résonante $\alpha_{in}$ (à la fréquence $\omega_c$) au port d'entrée de la cavité ; puis la modulation à la fréquence $\omega_c$ du coefficient de couplage g$_M$ Enfin, la lecture de la parité P$_{3'4}$ complète le protocole ; elle nécessite la modulation à la fréquence $\omega_d \neq \omega_c$ du couplage g$_M$ et simultanément, mais avec un déphasage, idéalement de $\pi$/2, du couplage g'$_E$, ainsi que l'application d'une excitation résonante $\alpha_{in}$ (à la fréquence $\omega_c$) au port d'entrée de la cavité.

Les impulsions aux fréquences $\omega_c$ et $\omega_d$ présentent des relations de phase constantes. Pour des impulsions de fréquences différentes, la relation de phase s'entend au début de l'impulsion ; par exemple, les porteuses aux fréquences $\omega_c$ et $\omega_d$ peuvent être en phase entre elle aux instants initiaux des impulsions. Cela est typiquement obtenu en utilisant une horloge atomique de synchronisation entre les différentes sources hyperfréquences.

La figure [5B] illustre le protocole de réalisation du tressage $\hat{B}_{41}$ qui se différencie du précédent seulement par l'ordre de deux opérations et qui conduit à un résultat de signe opposé de la mesure de la parité P$_{3'4}$.

Comme dans le protocole précédent, l'initialisation est effectuée en modulant le coefficient de couplage g'$_E$ à la fréquence $\omega_c$ pour mesurer la parité P$_{42'}$. Le tressage proprement dit - représenté par un opérateur $\hat{\Pi}_{23}\hat{B}_{41}$ comporte la modulation du coefficient de couplage g$_L$ à la fréquence $\omega_c$ ; puis la modulation à la fréquence $\omega_c$ du coefficient de couplage g$_M$ ; puis la modulation à la fréquence $\omega_d \neq \omega_c$ du couplage g$_M$ et simultanément, mais avec un déphasage, idéalement de $\pi$/2, du couplage g$_R$, ainsi que l'application d'une excitation résonante $\alpha_{in}$ (à la fréquence $\omega_c$) au port d'entrée de la cavité. Enfin, la lecture de la parité P$_{3'4}$ complète le protocole ; elle nécessite la modulation à la fréquence $\omega_d \neq \omega_c$ du couplage g$_M$ et simultanément, mais avec un déphasage, idéalement de $\pi$/2, du couplage g'$_E$, ainsi que l'application d'une excitation résonante $\alpha_{in}$ (à la fréquence $\omega_c$) au port d'entrée de la cavité.

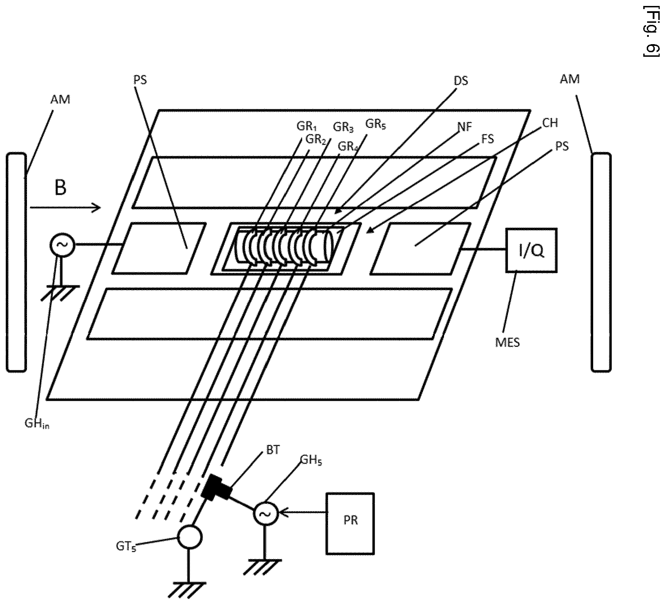

La [Fig. 6] représente, très schématiquement, un dispositif selon un mode de réalisation de l'invention, mettant en œuvre la chaîne de 6 modes de Majorana de la [Fig. 4].

La cavité CH est de type guide d'onde coplanaire, obtenue en gravant un résonateur dans un film métallique supraconducteur (Goeppl 2008). La fréquence de son mode fondamental est typiquement de l'ordre de 10 GHz.

La cavité présente un port d'entrée PE à une extrémité et un port de sortie, ou de lecture, PS à l'extrémité opposée (dans d'autres modes de réalisation, un seul et même port peut accomplir les deux fonctions). Un générateur de signaux hyperfréquences GH$_{in}$ est relié au port d'entrée, permettant l'excitation d'un mode de la cavité, tandis qu'un circuit mesure MES relié au port de sortie permet de mesurer au moins une quadrature, et de préférence les deux quadratures, de ce mode.

Un aimant AM génère un champ magnétique stationnaire B$_0$ dans l'axe de la cavité.

Un dispositif électronique supraconducteur DS est agencé à un ventre du champ électrique du mode de la cavité. Ce dispositif comprend un nanofil semi-conducteur NF à fort couplage spin-orbite, isolé électriquement du plan de masse de la cavité et orienté parallèlement au champ magnétique B. Le couplage spin-orbite peut être intrinsèque, comme par exemple dans le cas de nanofils de InSb ou InAs, ou extrinsèque, induit par une texture magnétique d'un substrat sur lequel le nanofil (par exemple un nanotube de carbone) est déposé. Ce nanofil est recouvert d'un film supraconducteur FS de largeur de bande interdite $\Delta$ et contacté par 5 électrodes (grilles) GR$_1$ - GR$_5$, comme décrit dans (Cottet 2013) ; plus généralement, il y a 2N grilles pour générer 2N modes de Majorana. Les grilles doivent être suffisamment espacées pour assurer une relativement bonne localisation des modes de Majorana (c'est-à-dire que l'énergie $\varepsilon_O$ de ces modes doit être beaucoup plus petite, par exemple d'un facteur 10 ou plus, que la largeur de bande interdite $\Delta$).

Le champ magnétique B doit être suffisamment intense pour induire une phase électronique topologique, au potentiel électrochimique d'équilibre $\mu$ (dans un modèle simple, $> \sqrt{(g\mu_B B)^2 - \Delta^2}$ ), où g est le facteur de Landé et $\mu_B$ le magnéton de Bohr), mais pas trop intense pour que la cavité puisse rester supraconductrice.

Des générateurs de tensions GT$_i$ i=1 - 5 (seul GT$_5$ est représenté) reliés aux grilles permettent de changer localement le potentiel chimique du nanofil, par exemple à une valeur de $\mu$' telle que $\mu' < \sqrt{(g\mu_B B)^2 - \Delta^2}$ ) comme proposé p dans (Cottet 2013). C'est cette modulation de potentiel chimique qui permet l'apparition des modes de Majorana.

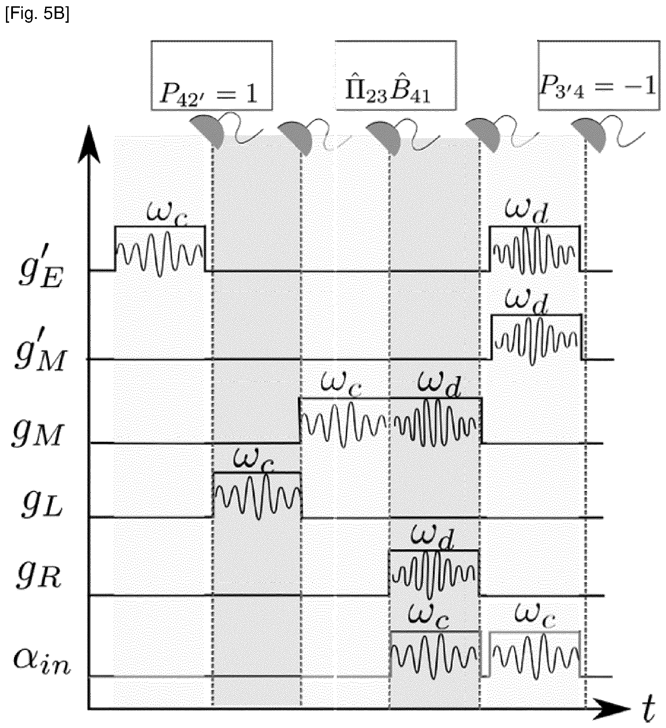

En outre, les grilles sont reliées à des générateurs de signaux hyperfréquence GH$_i$ i=1 - 5 (seul GH$_5$ est représenté) par l'intermédiaire de tés de polarisation BT respectifs. Ces générateurs sont pilotés par un processeur PR pour générer une séquence d'impulsion aux fréquences $\omega_d$ et $\omega_c$ du type décrit plus haut en référence à la [Fig. 5A] et à la [Fig. 5B].

Comme expliqué plus haut, les impulsions présentent une durée de quelques fois $1/x$, $\kappa$ étant la largeur spectrale du mode de la cavité, par exemple 3/x. Leur puissance est typiquement de l'ordre de quelques milliwatt. Le décalage en fréquence entre $\omega_d$ et $\omega_c$ est typiquement compris entre $\kappa$ et 10 $\kappa$, il peut être par exemple de 5x.

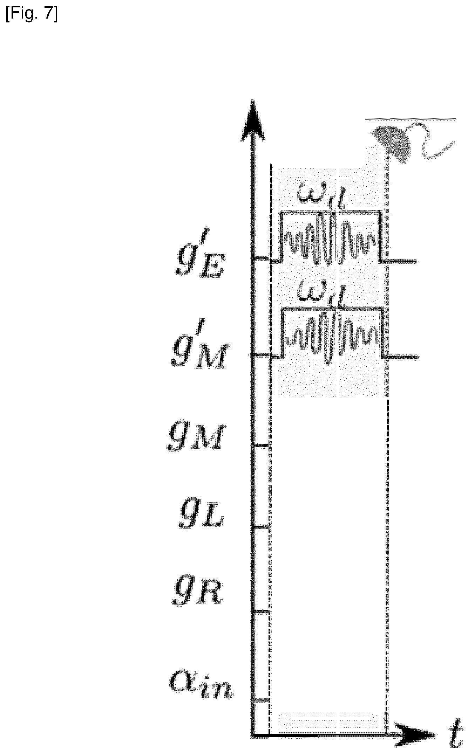

En plus du tressage, le dispositif de la [Fig. 6] (et plus généralement du schéma de la [Fig. 4] permet de réaliser une porte T (dite aussi « porte $\pi/8$ »). Pour cela, il suffit d'appliquer simultanément deux excitations hors résonance (typiquement à la fréquence $\omega_c$) à deux liaisons adjacentes de la chaîne de modes de Majorana et de lire simultanément les deux quadratures du champ en sortie de la cavité (ce qui peut être obtenu par une seule mesure selon une direction formant des angles de 45° avec les axes du plan IQ). Par exemple, dans le dispositif de la [Fig. 6] les excitations peuvent être appliquées aux grilles $GR_4$, $GR_5$ pour moduler les couplages $g'_E$, $g'_M$ du schéma de la [Fig. 4]. Cela est illustré sur la [Fig. 7].

Or, il a été démontré dans (Karzig 2017) que des opérations de tressage suffisent pour réaliser toutes les portes de Clifford à 1 qubit, ainsi qu'une porte d'intrication à deux qubits notée W. L'ensemble des deux permet de réaliser des portes à deux qubits entre qubits voisins, dont la porte CNOT. En outre, des portes CNOT et des portes $\pi/8$ à 1 qubit suffisent pour réaliser un calculateur universel (Sau 2010). Une extension à plusieurs qubits du dispositif de la [Fig. 6] ou du schéma de la [Fig. 4], comportant six modes de Majorana pour chaque qubit, permet donc de réaliser un ordinateur quantique universel.

Pour pouvoir effectuer des opérations à deux qubits il suffit de disposer d'une chaîne de 12 modes de Majorana - c'est-à-dire deux sous-ensembles de 6 modes encodant chacun un qubit - et d'effectuer un tressage sur des modes des deux sous-ensembles. L'invention peut donc servir de base à un ordinateur quantique générique.

La [Fig. 6] constitue un exemple de plateforme physique pour la mise en œuvre de l'invention, mais elle n'est nullement limitative. D'autres réalisations sont envisageables sans sortir du cadre de l'invention ; une mono-dimensionnalité stricte du dispositif électronique supraconducteur supportant la chaîne de modes de Majorana est très avantageuse sur le plan technologique, mais pas essentielle en principe.

Références :

(Sato 2017) : Masatoshi Sato, Yoichi Ando « Topological superconductors: a review » arXiv:1608.03395v3, 4 avril 2017.

(Beenakker 2019): C. W. J. Beenakker « Search for non-Abelian Majorana braiding statistics in superconductors » arXiv:1907.06497v1, 15 juillet 2019.

(Cottet 2013): A. Cottet, T. Kontos, B. Douçot « Squeezing light with Majorana fermions » arXiv:1307.4185v4, 12 novembre 2013.

(You 2014) : J. Q. You et al. « Encoding a qubit with Majorana modes in superconducting circuits » arXiv: 1108.3712v2, 20 septembre 2014.

(Vijay 2016): Sagar Vijay, Liang Fu « Braiding without Braiding: Teleportation-Based Quantum Information Processing with Majorana Zero Modes » arXiv: 1609.00950v1, 4 septembre 2016.

(Goeppl 2008) : M. Göppl et al. « Coplanar Waveguide Resonators for Circuit Quantum Electrodynamics », arXiv: 0807.4094v1,25 juillet 2008

(Karzig 2017) : T. Karzig et al. « Scalable Designs for Quasiparticle-Poisoning-Protected Topological Quantum Computation with Majorana Zero Modes » arXiv:1610.05289v4, 21 juin 2017.

(Sau 2010) : J. D. Sau et al. « Universal quantum computation in a semiconductor quantum wire network. » arXiv:1007.4204v3, 24 novembre 2010.

(Kornich 2020) : V.Kornich et al. « Braiding and all quantum operations with Majorana modes in 1D », arXiv 14 septembre 2020 et Physical Review Letters, 126(11), 117701.

**Revendications**

1. Dispositif de calcul quantique comprenant :

   - une cavité hyperfréquence (CH) ayant un port d'entrée (PE) et un port de sortie (PS), distincts ou coïncidents ;
   - un dispositif électronique supraconducteur (DS) couplé de manière capacitive à la cavité hyperfréquence et configuré pour supporter une chaine de 2N modes de Majorana ($MM_1$ - $MM_4$, $MM_{2'}$, $MM_{3'}$), N étant un entier positif ; et
   - des moyens de couplage ($GR_1$ - $GR_5$) pour appliquer des excitations hyperfréquences entre chaque paire de modes de Majorana adjacents de la chaîne et
   - un circuit électronique de mesure (MES) adapté pour mesurer au moins une quadrature (I, Q) d'un champ hyperfréquence issu du port de sortie de la cavité, **caractérisé en ce qu'**il comprend également au moins un générateur de signaux hyperfréquence (GHin, GH1 - GH5) configuré pour générer :

      - des impulsions hyperfréquence à une première fréquence résonante avec la cavité ; et
      - des impulsions hyperfréquence à une deuxième fréquence non résonante avec la cavité,

         et pour appliquer sélectivement ces impulsions auxdits moyens de couplage et au port d'entrée de la cavité,
         et **en ce que** N est un multiple de 3, moyennant quoi le dispositif électronique supraconducteur supporte au moins un groupe constitué de quatre modes de Majorana susceptibles d'encoder un qubit (MM1, MM2, MM2', MM3') plus deux modes de Majorana auxiliaires (MM2, MM3)..

2. Dispositif de calcul quantique selon la revendication 1, comprenant également un circuit électronique de contrôle (PR) configuré ou programmé pour piloter le générateur de signaux hyperfréquence de manière à :

   a) appliquer une première excitation hyperfréquence à la première fréquence entre un quatrième et un cinquième mode de Majorana à partir d'une extrémité de la chaine ou d'une portion de la chaine comprenant six modes de Majorana ; puis
   b) appliquer une deuxième excitation hyperfréquence à la première fréquence entre un premier et un deuxième mode de Majorana à partir de ladite extrémité ; puis
   c) appliquer simultanément une troisième excitation hyperfréquence à la deuxième fréquence entre le deuxième et un troisième mode de Majorana à partir de ladite extrémité ; une quatrième excitation hyperfréquence à la deuxième fréquence entre le troisième et le quatrième mode de Majorana, la troisième et la quatrième excitations hyperfréquences présentant un déphasage ; et une cinquième excitation hyperfréquence à la première fréquence au port d'entrée de la cavité ; puis
   d) appliquer une sixième excitation hyperfréquence à la première fréquence entre le deuxième et le troisième mode de Majorana ; puis
   e) appliquer simultanément une septième excitation hyperfréquence à la deuxième fréquence entre le quatrième et le cinquième mode de Majorana ; une huitième excitation hyperfréquence à la deuxième fréquence entre le cinquième et un sixième mode de Majorana partir de ladite extrémité ; et une neuvième excitation hyperfréquence à la première fréquence au port d'entrée de la cavité ;

   l'ordre des opérations c) et d) pouvant être inversé.

3. Dispositif de calcul quantique selon la 2, le circuit électronique de contrôle configuré ou programmé pour piloter le circuit électronique de mesure pour mesurer une composante du champ hyperfréquence issu du port de sortie de la cavité en phase avec les excitations à la première fréquence après l'application de chaque excitation ou groupe d'excitations.

4. Dispositif de calcul quantique selon l'une des revendications 2 ou 3 dans lequel le circuit électronique de contrôle (PR) est également configuré ou programmé pour piloter le générateur de signaux hyperfréquence de manière à : appliquer simultanément une neuvième et une dixième excitation hyperfréquence à la deuxième fréquence entre deux paires adjacentes de modes de Majorana adjacent, et pour piloter le circuit électronique de mesure pour mesurer deux composantes du champ hyperfréquence issu du port de sortie de la cavité en phase et en quadrature avec les excitations à la première fréquence.

5. Dispositif de calcul quantique selon l'une quelconque des revendications précédentes dans lequel le dispositif électronique supraconducteur comprend un nanofil semi-conducteur (NF) présentant un couplage spin-orbite, disposé en correspondance d'un ventre du champ électrique d'un mode (CF) de la cavité et sur lequel est déposé un matériau supraconducteur (FS), le dispositif comprenant également un aimant (AM) générant un champ magnétique (B) parallèle au nanofil.

6. Dispositif de calcul quantique selon la revendication 5 dans lequel le dispositif électronique supraconducteur comprend également 2N-1 électrodes ($GR_1$ - $GR_5$) permettant l'application de potentiels électrostatiques pour générer les modes de Majorana, lesdites électrodes constituant également lesdits moyens de couplage pour appliquer des excitations hyperfréquences.

7. Procédé de réalisation d'une porte quantique de tressage sur un qubit au moyen d'un dispositif de calcul quantique selon l'une des revendications précédentes lorsqu'elle dépend de la revendication 3, le procédé comportant les étapes suivantes :

   a) application d'une première excitation hyperfréquence à la première fréquence entre un quatrième et un cinquième mode de Majorana à partir d'une extrémité de la chaine ou d'une portion de la chaine comprenant six modes de Majorana ; puis
   b) application d'une une deuxième excitation hyperfréquence à la première fréquence entre un premier et un deuxième mode de Majorana à partir de ladite extrémité ; puis
   c) application simultanée d'une une troisième excitation hyperfréquence à la deuxième fréquence entre le deuxième et un troisième mode de Majorana à partir de ladite extrémité ; d'une quatrième excitation hyperfréquence à la deuxième fréquence entre le troisième et le quatrième mode de Majorana ; et d'une cinquième excitation hyperfréquence à la première fréquence au port d'entrée de la cavité ; puis
   d) application d'une sixième excitation hyperfréquence à la première fréquence entre le deuxième et le troisième mode de Majorana ; puis
   e) application simultanée d'une septième excitation hyperfréquence à la deuxième fréquence entre le quatrième et le cinquième mode de Majorana ; d'une huitième excitation hyperfréquence à la deuxième fréquence entre le cinquième et un sixième mode de Majorana partir de ladite extrémité ; et d'une neuvième excitation hyperfréquence à la première fréquence au port d'entrée de la cavité ;

   l'ordre des étapes c) et d) pouvant être inversé.

8. Procédé selon la revendication 7 comprenant également la mesure d'une composante du champ hyperfréquence issu du port de sortie de la cavité en phase avec les excitations à la première fréquence après l'application de chaque excitation ou groupe d'excitations.

9. Procédé de réalisation d'une porte T quantique sur un qubit au moyen d'un dispositif de calcul quantique selon l'une des revendications 1 à 5, le procédé comportant les étapes suivantes :

   appliquer simultanément deux excitations hyperfréquences à la deuxième fréquence entre deux paires adjacentes de modes de Majorana adjacent, et
   mesurer deux composantes du champ hyperfréquence issu du port de sortie de la cavité en phase et en quadrature avec les excitations à la première fréquence.

**Patentansprüche**

1. Quantenrechenvorrichtung, umfassend:

   - einen Mikrowellenhohlraum (CH) mit einem Eingangsanschluss (PE) und einem Ausgangsanschluss (PS), die getrennt oder zusammenfallend sein können;
   - eine supraleitende elektronische Vorrichtung (DS), die mit dem Mikrowellenhohlraum kapazitiv gekoppelt und dazu konfiguriert ist, eine Kette von 2N Majorana-Moden ($MM_1$ - $MM_4$, $MM_{2'}$, $MM_{3'}$) zu unterstützen, wobei N eine positive ganze Zahl ist; und
   - Kopplungsmittel ($GR_1$ - $GR_5$) zum Anlegen von Mikrowellenanregungen zwischen jedem Paar benachbarter Majorana-Moden der Kette und
   - eine elektronische Messschaltung (MES), die dazu ausgelegt ist, mindestens eine Quadratur (I, Q) eines Mikrowellenfeldes zu messen, das vom Ausgangsanschluss des Hohlraums stammt, **dadurch gekennzeich-**

**net, dass** sie auch mindestens einen Mikrowellensignalgenerator (GHin, GH1 - GH5) umfasst, der konfiguriert ist zum Generieren von:

- Mikrowellenimpulsen bei einer ersten Resonanzfrequenz mit dem Hohlraum; und
- Mikrowellenimpulsen bei einer zweiten Frequenz, die nicht mit dem Hohlraum in Resonanz steht,

und zum selektiven Anlegen dieser Impulse auf die genannten Kopplungsmittel und den Eingangsanschluss des Hohlraums,

und **dadurch, dass** N ein Vielfaches von 3 ist, wodurch die supraleitende elektronische Vorrichtung mindestens eine Gruppe bestehend aus vier Majorana-Moden, die geeignet sind, ein Qubit zu codieren (MM1, MM2, MM2', MM3'), plus zwei zusätzliche Majorana-Moden (MM2, MM3), unterstützt.

2. Quantenrechenvorrichtung nach Anspruch 1, die auch eine elektronische Steuerschaltung (PR) umfasst, die dazu konfiguriert oder programmiert ist, den Mikrowellensignalgenerator zu steuern zum:

a) Anlegen einer ersten Mikrowellenanregung bei der ersten Frequenz zwischen einem vierten und einem fünften Majorana-Modus von einem Ende der Kette oder einem Abschnitt der Kette aus, der sechs Majorana-Moden umfasst; dann

b) Anlegen einer zweiten Mikrowellenanregung bei der ersten Frequenz zwischen einem ersten und einem zweiten Majorana-Modus von dem Ende aus; dann

c) gleichzeitiges Anlegen einer dritten Mikrowellenanregung bei der zweiten Frequenz zwischen dem zweiten und einem dritten Majorana-Modus von dem Ende aus; einer vierten Mikrowellenanregung bei der zweiten Frequenz zwischen dem dritten und dem vierten Majorana-Modus, wobei die dritte und die vierte Mikrowellenanregung eine Phasenverschiebung aufweisen; und einer fünften Mikrowellenanregung bei der ersten Frequenz an den Eingangsanschluss des Hohlraums; dann

d) Anlegen einer sechsten Mikrowellenanregung bei der ersten Frequenz zwischen dem zweiten und dem dritten Majorana-Modus; dann

e) gleichzeitiges Anlegen einer siebten Mikrowellenanregung bei der zweiten Frequenz zwischen dem vierten und dem fünften Majorana-Modus; einer achten Mikrowellenanregung bei der zweiten Frequenz zwischen dem fünften und einem sechsten Majorana-Modus von dem Ende aus; und einer neunten Mikrowellenanregung bei der ersten Frequenz an den Eingangsanschluss des Hohlraums;

wobei die Reihenfolge der Operationen c) und d) umgekehrt werden kann.

3. Quantenrechenvorrichtung nach Anspruch 2, wobei die elektronische Steuerschaltung dazu konfiguriert oder programmiert ist, die elektronische Messschaltung zu steuern, um eine Komponente des Mikrowellenfeldes zu messen, das vom Ausgangsanschluss des Hohlraums stammt und mit den Anregungen bei der ersten Frequenz nach dem Anlegen jeder Anregung oder Gruppe von Anregungen in Phase ist.

4. Quantenrechenvorrichtung nach einem der Ansprüche 2 oder 3, wobei die elektronische Steuerschaltung (PR) auch dazu konfiguriert oder programmiert ist, den Mikrowellensignalgenerator so zu steuern, dass: gleichzeitig eine neunte und eine zehnte Mikrowellenanregung bei der zweiten Frequenz zwischen zwei benachbarten Paaren von benachbarten Majorana-Moden angelegt wird, und um die elektronische Messschaltung zu steuern, um zwei Komponenten des Mikrowellenfeldes zu messen, das vom Ausgangsanschluss des Hohlraums stammt und mit den Anregungen bei der ersten Frequenz in Phase und in Quadratur ist.

5. Quantenrechenvorrichtung nach einem der vorstehenden Ansprüche, wobei die supraleitende elektronische Vorrichtung einen spin-bahngekoppelten Halbleiter-Nanodraht (NF) umfasst, der entsprechend einem Bauch des elektrischen Feldes eines Modus (CF) des Hohlraums angeordnet ist und auf dem ein supraleitendes Material (FS) abgeschieden ist, wobei die Vorrichtung auch einen Magneten (AM) umfasst, der ein Magnetfeld (B) parallel zum Nanodraht generiert.

6. Quantenrechenvorrichtung nach Anspruch 5, wobei die supraleitende elektronische Vorrichtung auch 2N-1 Elektroden ($GR_1$ - $GR_5$) umfasst, die das Anlegen elektrostatischer Potenziale zur Generierung der Majorana-Moden ermöglichen, wobei die Elektroden auch die Kopplungsmittel zum Anlegen von Mikrowellenanregungen bilden.

7. Verfahren zur Realisierung eines Quanten-Braiding-Gatters an einem Qubit mittels einer Quantenrechenvorrichtung nach einem der vorstehenden Ansprüche, wenn abhängig von Anspruch 3, wobei das Verfahren die folgenden Schritte umfasst:

a) Anlegen einer ersten Mikrowellenanregung bei der ersten Frequenz zwischen einem vierten und einem fünften Majorana-Modus von einem Ende der Kette oder einem Abschnitt der Kette aus, der sechs Majorana-Moden umfasst; dann

b) Anlegen einer zweiten Mikrowellenanregung bei der ersten Frequenz zwischen einem ersten und einem zweiten Majorana-Modus von dem Ende aus; dann

c) gleichzeitiges Anlegen einer dritten Mikrowellenanregung bei der zweiten Frequenz zwischen dem zweiten und einem dritten Majorana-Modus von dem Ende aus; einer vierten Mikrowellenanregung bei der zweiten Frequenz zwischen dem dritten und dem vierten Majorana-Modus; und einer fünften Mikrowellenanregung bei der ersten Frequenz an den Eingangsanschluss des Hohlraums; dann

d) Anlegen einer sechsten Mikrowellenanregung bei der ersten Frequenz zwischen dem zweiten und dem dritten Majorana-Modus; dann

e) gleichzeitiges Anlegen einer siebten Mikrowellenanregung bei der zweiten Frequenz zwischen dem vierten und dem fünften Majorana-Modus; einer achten Mikrowellenanregung bei der zweiten Frequenz zwischen dem fünften und einem sechsten Majorana-Modus von dem Ende aus; und einer neunten Mikrowellenanregung bei der ersten Frequenz an den Eingangsanschluss des Hohlraums;

wobei die Reihenfolge der Schritte c) und d) umgekehrt werden kann.

8. Verfahren nach Anspruch 7, das auch die Messung einer Komponente des Mikrowellenfeldes aus dem Ausgangsanschluss des Hohlraums in Phase mit den Anregungen bei der ersten Frequenz nach dem Anlegen jeder Anregung oder Gruppe von Anregungen umfasst.

9. Verfahren zur Realisierung eines Quanten-T-Gatters an einem Qubit mittels einer Quantenrechenvorrichtung nach einem der Ansprüche 1 bis 5, wobei das Verfahren die folgenden Schritte umfasst:
Gleichzeitiges Anlegen von zwei Mikrowellenanregungen bei der zweiten Frequenz zwischen zwei benachbarten Paaren von benachbarten Majorana-Moden und Messen von zwei Komponenten des aus dem Ausgangsanschluss des Hohlraums stammenden Mikrowellenfeldes in Phase und in Quadratur mit den Anregungen bei der ersten Frequenz.

## Claims

1. A quantum computing device comprising:

- a microwave cavity (CH) having an input port (PE) and an output port (PS) that are separate or coincident;
- a superconducting electronic device (DS) capacitively coupled to the microwave cavity and configured to support a chain of 2N Majorana modes ($MM_1$ - $MM_4$, $MM_{2'}$, $MM_{3'}$), N being a positive integer; and
- coupling means ($GR_1$ - $GR_5$) for applying microwave excitations between each pair of adjacent Majorana modes of the chain and
- an electronic measurement circuit (MES) suitable for measuring at least one quadrature (I, Q) of a microwave field coming from the output port of the cavity, **characterized in that** it also comprises at least one microwave signal generator (GHin, GH1 - GH5) configured to generate:

- microwave pulses at a first frequency resonant with the cavity; and
- microwave pulses at a second frequency not resonant with the cavity,

and to selectively apply these pulses to said coupling means and to the input port of the cavity,
and **in that** N is a multiple of 3, whereby the superconducting electronic device supports at least one group consisting of four Majorana modes capable of encoding a qubit (MM1, MM2, MM2', MM3') plus two auxiliary Majorana modes (MM2, MM3).

2. The quantum computing device as claimed in claim 1, also comprising an electronic control circuit (PR) configured or programmed to drive the microwave signal generator so as to:

a) apply a first microwave excitation at the first frequency between a fourth and a fifth Majorana mode from one end of the chain or from a portion of the chain comprising six Majorana modes; and then

b) apply a second microwave excitation at the first frequency between a first and a second Majorana mode from said end; and then

c) simultaneously apply a third microwave excitation at the second frequency between the second and a third Majorana mode from said end; a fourth microwave excitation at the second frequency between the third and the fourth Majorana mode, the third and the fourth microwave excitations exhibiting a phase shift; and a fifth microwave excitation at the first frequency to the input port of the cavity; and then

d) apply a sixth microwave excitation at the first frequency between the second and the third Majorana mode; and then

e) simultaneously apply a seventh microwave excitation at the second frequency between the fourth and the fifth Majorana mode; an eighth microwave excitation at the second frequency between the fifth and a sixth Majorana mode from said end; and a ninth microwave excitation at the first frequency to the input port of the cavity; the order of operations c) and d) being able to be swapped.

3. The quantum computing device as claimed in claim 2, the electronic control circuit being configured or programmed to drive the electronic measurement circuit so as to measure a component of the microwave field coming from the output port of the cavity in phase with the excitations at the first frequency after the application of each excitation or group of excitations.

4. The quantum computing device as claimed in either of claims 2 and 3, wherein the electronic control circuit (PR) is also configured or programmed to drive the microwave signal generator so as to: simultaneously apply a ninth and a tenth microwave excitation at the second frequency between two adjacent pairs of adjacent Majorana modes, and to drive the electronic measurement circuit so as to measure two components of the microwave field coming from the output port of the cavity in phase and in quadrature with the excitations at the first frequency.

5. The quantum computing device as claimed in any one of the preceding claims, wherein the superconducting electronic device comprises a semiconductor nanowire (NF) exhibiting spin-orbit coupling, placed in correspondence with an antinode of the electric field of a mode (CF) of the cavity and on which a superconducting material (FS) is deposited, the device also comprising a magnet (AM) generating a magnetic field (B) parallel to the nanowire.

6. The quantum computing device as claimed in claim 5, wherein the superconducting electronic device also comprises 2N-1 electrodes ($GR_1$ - $GR_5$) for applying electrostatic potentials in order to generate the Majorana modes, said electrodes also constituting said coupling means for applying microwave excitations.

7. A method for producing a quantum braiding gate on a qubit by way of a quantum computing device as claimed in one of the preceding claims when dependent on claim 3, the method comprising the following steps:

a) applying a first microwave excitation at the first frequency between a fourth and a fifth Majorana mode from one end of the chain or from a portion of the chain comprising six Majorana modes; and then

b) applying a second microwave excitation at the first frequency between a first and a second Majorana mode from said end; and then

c) simultaneously applying a third microwave excitation at the second frequency between the second and a third Majorana mode from said end; a fourth microwave excitation at the second frequency between the third and the fourth Majorana mode; and a fifth microwave excitation at the first frequency to the input port of the cavity; and then

d) applying a sixth microwave excitation at the first frequency between the second and the third Majorana mode; and then

e) simultaneously applying a seventh microwave excitation at the second frequency between the fourth and the fifth Majorana mode; an eighth microwave excitation at the second frequency between the fifth and a sixth Majorana mode from said end; and a ninth microwave excitation at the first frequency to the input port of the cavity; the order of steps c) and d) being able to be swapped.

8. The method as claimed in claim 7, also comprising measuring a component of the microwave field coming from the output port of the cavity in phase with the excitations at the first frequency after the application of each excitation or group of excitations.

9. A method for producing a quantum T-gate on a qubit by way of a quantum computing device as claimed in one of claims 1 to 5, the method comprising the following steps:
simultaneously applying two microwave excitations at the second frequency between two adjacent pairs of adjacent Majorana modes, and measuring two components of the microwave field coming from the output port of the cavity in phase and in quadrature with the excitations at the first frequency.

[Fig. 1]

[Fig. 2A]

[Fig. 2B]

[Fig. 2C]

[Fig. 2D]

[Fig. 2E]

[Fig. 2F]

[Fig. 2G]

[Fig. 3A]

[Fig. 3B]

[Fig. 3C]

[Fig. 4]

[Fig. 5A]

[Fig. 5B]

[Fig. 6]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MASATOSHI SATO** ; **YOICHI ANDO**. Topological superconductors: a review. *arXiv:1608.03395v3*, 04 April 2017
- **C. W. J. BEENAKKER**. Search for non-Abelian Majorana braiding statistics in superconductors. *arXiv:1907.06497v1*, 15 July 2019
- **A. COTTET** ; **T. KONTOS** ; **B. DOUÇOT**. Squeezing light with Majorana fermions. *arXiv:1307.4185v4*, 12 November 2013
- **J. Q. YOU et al.** Encoding a qubit with Majorana modes in superconducting circuits. *arXiv: 1108.3712v2*, 20 September 2014
- **SAGAR VIJAY** ; **LIANG FU**. Braiding without Braiding: Teleportation-Based Quantum Information Processing with Majorana Zero Modes. *arXiv: 1609.00950v1*, 04 September 2016
- **M. GÖPPL et al.** Coplanar Waveguide Resonators for Circuit Quantum Electrodynamics. *arXiv: 0807.4094v1*, 25 July 2008
- **T. KARZIG et al.** Scalable Designs for Quasiparticle-Poisoning-Protected Topological Quantum Computation with Majorana Zero Modes. *arXiv:1610.05289v4*, 21 June 2017
- **J. D. SAU et al.** Universal quantum computation in a semiconductor quantum wire network.. *arXiv:1007.4204v3*, 24 November 2010
- **V.KORNICH et al.** Braiding and all quantum operations with Majorana modes in 1D. *Physical Review Letters*, 14 September 2020, vol. 126 (11), 117701